# EUROPEAN PATENT APPLICATION

(11) **EP 1 837 539 A2**
(43) Date of publication of application: **26.09.2007**
(21) Application number: 07251174.4
(22) Date of filing: 20.03.2007
(51) Int. Cl.: F16C 33/54

(54) **Roller bearing cage, roller bearing, and method of producing roller bearing race and roller bearing outer ring**

(30) Priority: 23.03.2006 JP 2006081364; 17.10.2006 JP 2006282379
(71) Applicant: JTEKT Corporation, Osaka-shi Osaka 542-8502 (JP)
(72) Inventor: Chihara, Katsuhiko, c/o JTEKT Corporation, Osaka-shi, Osaka 542-8502 (JP)
(74) Representative: Jennings, Nigel Robin

(57) **Abstract**

A thrust roller bearing cage (10) is a plate-shaped circular ring in which four arcuate pieces 1a, 1b, ... are laser welded along laser welding lines (4ab, 4bc, ...). A plurality of rectangular pockets (2a, 2b, ...) are formed at regular intervals in the cage (10), including the intervals including the laser welding lines (4ab, 4bc, ...). Each of the laser welding lines (4ab, 4bc, ...) extends across the total length from the inner periphery to an outer periphery of the circular ring, so that the laser welding lines have sufficient length and strength. A predetermined strength of the cage (10) can be obtained without decreasing the number of rollers which may be accommodating and wastage of material when making cages from sheet material is reduced.

## Description

### BACKGROUND OF THE INVENTION

### 1. Field of the Invention

The present invention relates to a roller bearing, particularly to a roller bearing cage and a method of producing a roller bearing race and a roller bearing outer ring.

### 2. Description of the Related Art

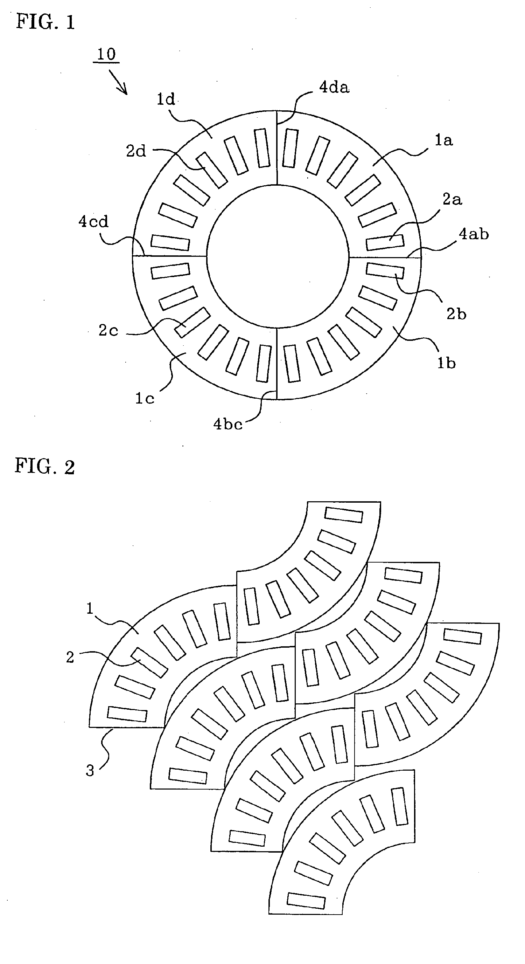

A thrust roller bearing cage (hereinafter abbreviated to "thrust cage") in a thrust roller bearing is a plate-shape circular ring which is used such that plural rollers located between a pair of rolling plates are arranged at predetermined positions. In the thrust cage, rectangular pockets are radially formed. In punching (blanking) the pockets and an inner peripheral range and cutting out (blanking) an outer peripheral range from the steel plate, the thrust cage is formed by press molding of one step or progressive steps. At this point, if many circular thrust cages are cut out from the rectangular steel plate, the steel between the adjacent outer peripheries, as well as the steel in the inner peripheral range, is not used and wasted. That is, a yield of a material dividing scheme is decreased.
In order to solve the problem, there is disclosed a technique in which divided pieces are formed by the press molding of the steel plate and the divided pieces are bonded to form the circular ring (see Japanese Utility Model Publication No. 47-39705, p. 1, Fig.2).

A radial roller bearing cage (hereinafter abbreviated to "radial cage") in a radial roller bearing is a cylindrical body which is used such that plural rollers located between an outer ring and an inner ring are arranged at predetermined positions. In the radial cage, the rectangular pockets are formed in an axial direction of the cylindrical body (of the outer ring and the inner ring). The radial cage is formed by "deep drawing" of the steel plate.
Therefore, currently "welded radial cage" in which a belt-shape plate material is processed in a ring shape is mainly used for large-scale production and cost reduction.

The conventional thrust roller bearing includes a pair of thrust races facing each other, plural rollers arranged between the facing thrust races, and ring cage which retains the rollers at substantially regular intervals along a circumferential direction of the thrust race.
In the pair of thrust races of the thrust roller bearing, the steel plate is usually formed in an integral shape by the press or turning working.

The conventional radial roller bearing includes an outer ring provided in an outer periphery of a shaft to be held, plural rollers arranged between the outer ring and the shaft, and a cylindrical cage which retains the rollers at substantially regular intervals along a circumferential direction of the outer ring.
The outer ring of the radial roller bearing, similarly, is usually formed in an integral shape by the press or turning working of the steel plate (for example, see Japanese Patent Application Laid-open No. 2003-13966, p. 2 to 3, Figs 1 and 2).

However, in the technique disclosed in Japanese Utility Model PublicationNo. 47-39705 (p. 1, Fig.2), the divided pieces are mechanically bonded, namely, an omega-shape cut is provided in one divided piece end while an omega-shape projection is provided in the other divided piece end, and both the divided pieces are fitted to each other. Therefore, pocket cannot be formed in the fitting range, which results in a problem that the number of rollers being able to be arranged is decreased compared with the not-bonded type thrust cage.

In the welded radial cage, because the bonding is performed by electric welding, it is necessary to ensure a wide welding width. Therefore, when the bonding (electric welding) is performed between the pockets (hereinafter referred to as "cage bar portion"), a distance between the pockets becomes wider (that is, the width of the cage bar portion is widened), which results in the problem that the number of rollers being able to be arranged is decreased. On the other hand, when the bonding (electric welding) is performed at pocket positions, i.e., between an edge of the pocket and an edge of the plate material (hereinafter referred to as "rib"), bonding strength runs short as a result of the short welding length. Particularly, in the case of a fluctuation in welding quality, there is the problem that the bonding strength cannot be secured.

The race of the conventional thrust roller bearing, is formed in the integral shape by the press or turning working of the steel plate. Therefore, the material of the central portion is scrapped. A ratio of the scrapped material increases as a diameter of the thrust roller bearing increases, which results in the problem that the yield of the material dividing scheme is decreased to significantly raise the cost. In the outer ring of the radial roller bearing, one steel plate is formed in an arcuate shape to obtain an outer ring element, and the circumferential end-face portions of outer ring elements are bonded to each other. In this case, it is necessary to secure the strength in the bonded portion of the confronting end-face portions of the outer ring elements.

The present invention is made in order to solve the above problem, and an object of the invention is to provide a roller bearing cage in which predetermined strength is obtained while the yield of the material dividing scheme is improved, a method of producing a roller bearing race and roller bearing outer ring, and a roller bearing including the roller bearing cage, the roller bearing race, and the roller bearing outer ring.

### SUMMARY OF THE INVENTION

(1) According to the present invention, there is provided a roller bearing cage which is of a plate-shape circular ring formed by welding plate-shape pieces each constituting a part of the plate-shape circular ring, the roller bearing cage including plural rectangular pockets which are radially formed; and welding lines on which the plate-shape pieces are welded.
(2) In the roller bearing cage according to the above item (1), the welding is laser welding.
(3) In the roller bearing cage according to the above items (1) or (2), the welding line is arranged from an inner periphery to an outer periphery of the plate-shape circular ring between pockets of the plural pockets.

(4) According to the present invention, there is provided a roller bearing cage which is of a cylinder body formed by laser welding a strip-shaped member so as to form a cylindrical shape, the roller bearing cage including plural rectangular pockets which are formed in an axial direction of the cylindrical body; and a laser welding line on which the strip-shaped member is laser-welded.
(5) In the roller bearing cage according to the above item (4), the laser welding line is arranged from one end portion to the other end portion of the cylindrical body between pockets of the plural pockets.

(6) According to the present invention, there is provided a roller bearing including plural rollers; and a roller bearing cage in which the rollers are arranged in a radial direction, wherein the roller bearing cage is the roller bearing cage according to any one of the above items (1) to (3) of the invention.

(7) According to the present invention, there is provided a roller bearing including plural rollers; and a roller bearing cage in which the rollers are arranged in parallel, wherein the roller bearing cage is the roller bearing cage according to the above items (4) or (5) of the invention.

(8) According to the present invention, there is provided a method of producing a roller bearing race, including the steps of machining a steel plate to form arcuate race pieces each of which has a shape obtained by dividing a roller bearing race into three or more segments; making plate thicknesses of the end portions of each arcuate race piece to be bonded smaller than those of other portions, confronting the end portions of the arcuate race pieces to be bonded; and bonding the confronting end portions to form the ring-shape roller bearing race.
(9) According to the present invention, there is provided a roller bearing, wherein a thrust roller bearing is formed using a roller bearing race produced by the roller bearing race producing method according to the invention.
(10) According to the present invention, there is provided a method of producing a roller bearing outer ring formed by bonding end-face portions of one or plural outer ring elements made of a steel plate, including the steps of making plate thicknesses of the end-face portions of the outer ring elements smaller than those of other portions, the outer ring elements being bonded at both the end-face portions; confronting the end-face portions of the outer ring elements to be bonded; and bonding the confronting end-face portions to form the ring-shape roller bearing outer ring.
(11) According to the present invention, there is provided a roller bearing, wherein a radial roller bearing is formed using a roller bearing outer ring produced by the roller bearing outer ring producing method according to the invention.

(1) In the roller bearing cage (thrust roller bearing cage) according to the invention, the yield of the material dividing scheme is improved because of the welding of the plate-shape pieces constituting a part of the plate-shape circular ring. Because the welding is the laser welding, the welding line becomes narrowed, and the yield of the material dividing scheme is further improved. Because the laser welding is performed on the laser welding line from the inner periphery to the outer periphery of the plate-shape circular ring between the pockets (or "in a column"), the distance between the pockets (or "width of the column") is not broadened, and thereby the number of rollers which can be aranged is not decreased. The strength is not decreased because of the long laser welding line. Therefore, the production cost is reduced, an operating life is lengthened, and reliability is improved.

(2) In the roller bearing cage (radial roller bearing cage) according the invention, the strip-shaped member is laser-welded, and the laser welding is performed on the narrow welding line. Therefore, the yield of the material dividing scheme is improved. Because the laser welding is performed on the laser welding line from one end portion to the other end portion of the cylindrical body between the pockets (that is "in a column"), the distance between the pockets (or "width of the column") is not broadened, and thereby the number of rollers which can be arranged is not decreased nor the strength is decreased. Therefore, the production cost is reduced, the operating life is lengthened, and the reliability is improved.

(3) The roller bearing (thrust roller bearing) according to the invention includes the roller bearing cage having the effect set forth in the above item (1) . Therefore, the production cost is reduced, the predetermined rollers can be arranged, the operating life is lengthened, and the reliability is improved.
(4) The roller bearing (radial roller bearing) according to the invention includes the roller bearing cage having the effect set forth in the above item (2) . Therefore, the production cost is reduced, the predetermined rollers can be arranged, the operating life is lengthened, and the reliability is improved.

(5) In the roller bearing race producing method according to the invention, the steel plate is worked to form arcuate race pieces each of which has a shape obtained by dividing a race into three or more segments, the plate thicknesses of the end portions of each arcuate race piece to be bonded are made smaller than those of other portions, the end portions of the arcuate race pieces are confronted to each other, and the end portions are bonded by the welding to form the ring-shape roller bearing race. In the arcuate race piece formed by processing the steel plate, because the hollow central portion is not generated, it is not necessary to scrap the material of the central portion unlike the conventional technique. Therefore, the yield of the material dividing scheme can be improved. The plate thickness of the end portions of the arcuate race pieces to be bonded is formed smaller than those of other regions, and the confronting end portions are bonded by the welding. Therefore, the bead is hardly generated, and the bonding can be performed while the thin plate thickness of the welded portion is maintained.
(6) In the roller bearing according to the invention, the thrust roller bearing is formed using the roller bearing race produced by the roller bearing race producing method. Therefore, when the roller passes by the welded portion of the race, no load is applied to the roller, so that there is no risk of breakage in the welded portion of the race.

(7) The roller bearing outer ring producing method according to the invention is the method of producing the roller bearing outer ring in which the end-face portions of one or plural outer ring elements made of the steel plate are bonded. The plate thickness of the end-face portions of the outer ring elements to be bonded is made smaller than those of other portions, the end-face portions are confronted to each other, and the end-face portions are bonded to form the ring-shape roller bearing outer ring by the welding. The plate thickness of the end-face portions of the outer ring materials to be bonded is made smaller than those of other regions, and the confronting end-face portions are bonded by the welding. Therefore, the bead is hardly generated, and the bonding can be performed while the thin plate thickness of the welded portion is maintained.
(8) In the roller bearing according to the invention, the radial roller bearing is formed using the roller bearing outer ring produced by the above-mentioned roller bearing race producing method. Therefore, when the roller passes by the welded portion of the outer ring, no load is applied to the roller, so that there is no risk of breakage in the welded portion of the outer ring, and the sufficient strength is obtained.

### BRIEF DESCRIPTION OF THE DRAWINGS

Fig. 1 is a plan view showing a thrust roller bearing cage according to a first embodiment of the invention;
Fig. 2 is a plan view schematically showing a material dividing scheme for arcuate divided pieces shown in Fig. 1;
Fig. 3 is a perspective view showing a radial roller bearing cage according to a third embodiment of the invention;
Fig. 4 is a plan view schematically showing a material dividing scheme for arcuate divided pieces of the radial roller bearing cage shown in Fig. 3;
Fig. 5 is a plan view showing a roller bearing race produced by a roller bearing race producing method according to a fifth embodiment of the invention;
Fig. 6 is a sectional view showing a bonded portion of the roller bearing race;
Fig. 7 is a plan view schematically showing a material dividing scheme for arcuate race pieces of the roller bearing race on a steel plate;
Fig. 8 is a sectional view showing an arcuate race piece of the roller bearing race;
Fig. 9 is a sectional view showing a relationship between the roller bearing race and a roller;
Fig. 10 is a perspective view showing a roller bearing outer ring produced by a roller bearing outer ring producing method according to a sixth embodiment of the invention; and
Fig. 11 is a sectional view showing the roller bearing outer ring.

### DESCRIPTION OF THE PREFERRED EMBODIMENTS

### (First Embodiment: Thrust Roller Bearing Cage)

Fig. 1 is a plan view showing a thrust roller bearing cage according to a first embodiment of the invention. Referring to Fig. 1, a thrust roller bearing cage (hereinafter referred to as "thrust cage") 10 is a plate-shape circular ring which is formed by laser-welding four arcuate pieces 1a, 1b, 1c, and 1d. In each of the arcuate pieces 1a, 1b, 1c, and 1d, rectangular pockets 2a, 2b, 2c, 2d are formed at regular intervals, respectively.
The arcuate pieces 1a and 1b are laser-welded at a laser welding line 4ab, the arcuate pieces 1b and 1c are laser-welded at a laser welding line 4bc, the arcuate pieces 1c and 1d are laser-welded at a laser welding line 4cd, and the arcuate pieces 1d and 1a are laser-welded at a laser welding line 4da. In the following description, subscripts of "a, b, c, d, ab, bc, cd, and da" are neglected for the common contents.

Because the laser welding line 4 has a narrow width, a distance between a pair of pockets 2 arranged across the laser welding line 4 can be equalized to a distance between a pair of pockets 2 which are adjacent to each other while not arranged across the laser welding line 4. Namely, the pockets 2 can be arranged all around at regular intervals irrespective of existence of the laser welding line 4. Therefore, the rollers can be arranged as many as rollers in a integrally-formed thrust cage (having no welded structure).
The laser welding line 4 lies across a total length from an inner periphery to an outer periphery of the circular ring (portion of "column" is laser welded). Therefore, sufficient bonding strength is obtained due to the welding line longer than that of the laser welding between an edge of the pocket 2 and the inner periphery or the outer periphery (or the rib).

Fig. 2 is a plan view schematically showing a material dividing scheme for the arcuate pieces constituting the roller bearing cage shown in Fig. 1.
Referring to Fig. 2, the inner periphery of one of the arcuate pieces 1 is brought close to the outer periphery of the other arcuate piece 1, and a side edge 3 of one of the arcuate pieces 1 is brought in parallel and close to a side edge of the other arcuate piece 1. Accordingly, because an amount of chip (scrap) generated in the material dividing scheme can be decreased, material cost included in production cost is reduced. Exactly, in the press molding, because peripheries (original plate side) of the arcuate pieces 1 are held down, the arcuate pieces 1 are punched in sector shapes to generate the chip in which sector-shaped marginal portions remain in a net shape.

Incidentally, although, the bonding of the four arcuate pieces 1 (aperture angle is 90°) is illustrated, the invention is not limited to the bonding of the four arcuate pieces. The invention can be also appropriately applied to at least the two arcuate pieces according to a diameter of the cage and the like. The material dividing scheme is not limited to the procedure shown in Fig. 2.
Although the flat-shape thrust cage 10 is illustrated in the first embodiment, the invention is not limited to the flat-shape thrust cage. For example, the thrust cage may be completed by the laser welding after one of or both the inner periphery and the outer periphery of the arcuate pieces 1 are bent to form a flange, or one of or both the inner periphery and the outer periphery may be bent to form the flange after the ring-shape thrust cage is formed by the laser welding.
In place of the rectangular pocket, hoods projected toward different directions may be provided at both the side edges of the pocket portion to retain the roller.

### (Second Embodiment: Thrust Roller Bearing)

A thrust roller bearing according to a second embodiment of the invention (not shown) includes a pair of rolling bearing rings formed by plate-shape circular rings, plural freely-rolling rollers arranged between the rolling bearing rings, and the thrust cage 10 (see Fig. 1) in which the rollers are arranged in a radial direction.
Therefore, because the thrust cage 10 has the above-described effect, in the thrust roller bearing of the second embodiment, the production cost is reduced, the predetermined number of rollers can be arranged (namely, predetermined thrust power can be supported), the operating life is lengthened, and the reliability is improved.

### (Third Embodiment: Radial Roller Bearing Cage)

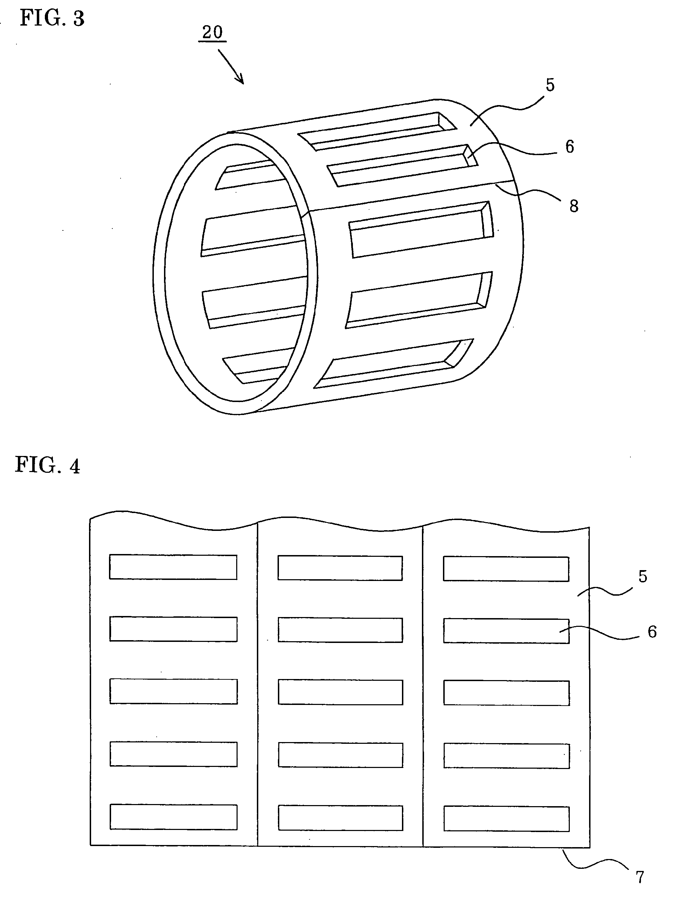

Fig. 3 is a perspective view showing a radial roller bearing cage according to a third embodiment of the invention. Referring to Fig. 3, in a radial roller bearing cage (hereinafter referred to as "radial cage") 20, one strip-shape element 5 is formed in a cylindrical shape, and end portions 7 are laser-welded at a laser welding line 8. Plural rectangular pockets 6 are formed all around at regular intervals.

Because the laser welding line 8 has the narrow width, the distance between the pair of pockets 6 arranged across the laser welding line 8 can be equalized to the distance between a pair of pockets 6 which are adjacent to each other while not arranged across the laser welding line 8. Namely, the pockets 6 can be arranged all around at regular intervals irrespective of existence of the laser welding line 8. Therefore, the rollers can be arranged as many as rollers in a radial cage formed by the deep drawing (having no welded structure).
The laser welding line 8 lies across the total length from one end portion to the other end portion of the cylindrical body (portion of "column" is laser welded). Therefore, the sufficient bonding strength is obtained due to the welding line longer than that of the laser welding between the edges of the pocket 6 and the end portions of the cylindrical body (or the rib).

Fig. 4 is a plan view schematically showing a material dividing scheme for the arcuate pieces constituting the roller bearing cage shown in Fig. 3.
Referring to Fig. 4, the material dividing scheme can be performed while the side edge portions of the strip-shape material 5 are brought in parallel and close to each other. Accordingly, material cost included in production cost is reduced, because an amount of chip (scrap) generated in the material dividing scheme can be decreased compared with the deep drawing of the disk-shape material or a ring-shape material. Exactly, in the press molding, because the peripheries (original plate side) of the strips are held down, the strips are punched in rectangular shapes to generate the chip in which marginal portions around rectangular-shapes remain in a net shape.

Incidentally, although the simply-cylindrical radial cage 20 is illustrated in the third embodiment, the invention is not limited to the simply-cylindrical radial cage. One of or both the side edges of the strip-shape material 5 may be bent to form the flange prior to the laser welding. A pocket having plural width may be formed in place of the rectangular pocket 6, and bending may be performed in the range of the wide widths to form an M-type radial cage.

### (Fourth Embodiment: Radial Roller Bearing)

A radial roller bearing according to a fourth embodiment of the invention (not shown) includes an outer ring formed by the cylindrical body, an inner ring accommodated in the outer ring, plural freely-rolling rollers arranged between the outer ring and the inner ring, and the radial cage 20 (see Fig. 3) in which the rollers are arranged in an axial direction of the outer ring (or inner ring).
Therefore, because the radial cage 20 has the above-described effect, in the radial roller bearing of the fourth embodiment, the production cost is reduced, the predetermined number of rollers can be arranged (namely, predetermined thrust power can be supported), the operating life is lengthened, and the reliability is improved.

### (Fifth Embodiment: Method of Producing Roller Bearing Race)

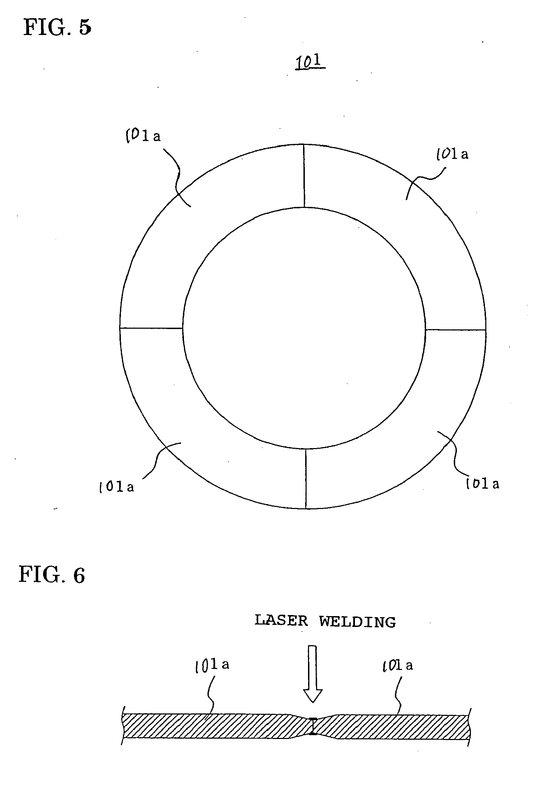

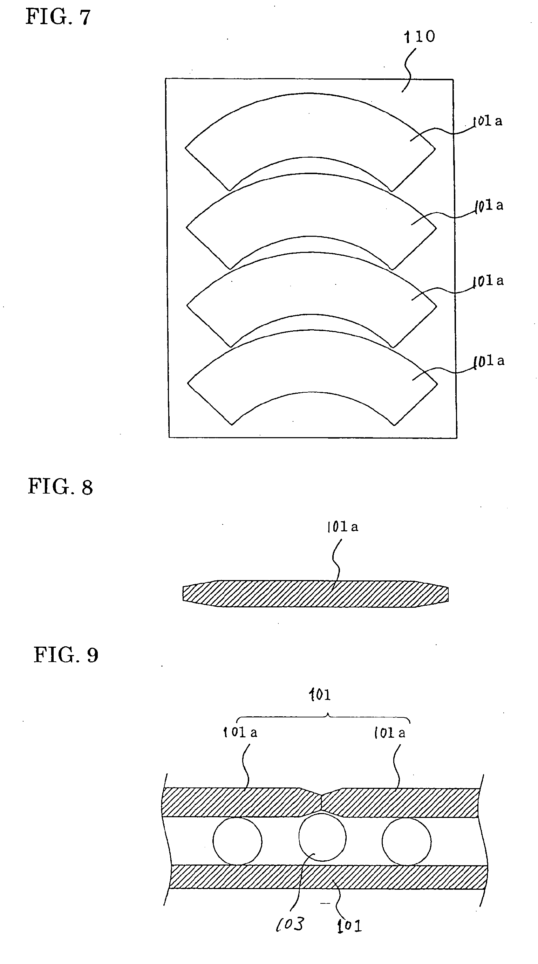

Fig. 5 is a plan view showing a roller bearing race produced by a roller bearing race producing method according to a fifth embodiment of the invention, Fig. 6 is a sectional view showing a bonded portion of the roller bearing race, Fig. 7 is a plan view schematically showing a material dividing scheme for arcuate race pieces from a steel plate, Fig. 8 is a sectional view showing the roller bearing race, and Fig. 9 is a sectional view showing a relationship between the roller bearing race and a roller.
In the roller bearing race producing method of the fifth embodiment, one steel plate 110 is processed by the press to form arcuate race pieces 101a each of which has a shape obtained by dividing a roller bearing race into four seguments. Fig. 7 shows the material dividing scheme for the arcuate race pieces from the steel plate.
As shown in Fig. 7, in the material dividing scheme of the one steel plate 110, the four arcuate race pieces 101a are longitudinally arranged such that the outer periphery of one of arcuate race pieces 101a is brought close to the inner periphery of the other arcuate race piece 101a.

When the conventional ring-shape race is punched from the steel plate by a press machine, the central portion is scrapped. On the other hand, in the fifth embodiment, because the four arcuate race pieces 101a are longitudinally arranged in the one steel plate 110 such that the outer periphery of one of arcuate race pieces 101a is brought close to the inner periphery of the other arcuate race piece 101a, the amount of chip (scrap) generated in the material dividing scheme can be decreased, and material cost included in production cost is reduced.
As shown in Fig. 8, at both the end portions of the arcuate race pieces 101a to be bonded, plate thicknesses are made smaller than plate thicknesses of other portions by the press or turning working.

Then, as shown in Fig. 6, the confronting end portions to be bonded with the plate thicknesses made smaller than those of other portions are laser-welded to form a ring-shape roller bearing race 101 as shown in Fig. 5.
Thus, the confronting end portions to be bonded are laser-welded while the plate thicknesses of the end portions of the arcuate race pieces 101a are made smaller than those of other portions. In the resistance welding, the plate thickness increases due to unavoidable generation of welding beads even if the plate thickness of the welded portion is thinned. On the other hand, in the laser welding, because the beads are hardly generated, the bonding can be performed keeping the plate thickness of the welded portion thin.

In the case where the thrust roller bearing is formed to include plural rollers 103 arranged between the roller bearing race 101 produced by the roller bearing race producing method of the invention and one ring-shape race 101 formed by press working of the steel plate, and the disk-shape cage which retains the freely-rolling rollers 103 at predetermined intervals in a circumferential direction, no load is applied to the roller 103, when the roller 103 passes by the welded portion of the arcuate race pieces 101a of the roller bearing race 101, as shown in Fig. 9. Therefore, there is no risk of breakage in the welded portion of the arcuate race pieces 101a of the roller bearing race 101. A needle roller, a cylindrical roller, and the like are used as the roller retained by the cage.

In the roller bearing race 101 produced by the roller bearing race producing method of the fifth embodiment, the four arcuate race pieces 101a are laser-welded to form the roller bearing race 101 having the ring shape. However, the invention is not limited thereto. For example, at least three arcuate race pieces 101a may be laser-welded to form the roller bearing race 101 having the ring shape.
Various welding methods such as TIG welding in which the smaller amount of bead is generated may be adopted in place of the laser welding.
In the fifth embodiment, the four arcuate race pieces 101a, each of which is one of four segments formed by dividing a race, are formed by the press working of the one steel plate 110 . The arcuate race piece 101a may be formed by various processing methods such as laser machining and cutting with a cutting tool in place of the press working. The material dividing scheme for the four arcuate race pieces 101a is not limited to the arrangement shown in Fig. 7.
Although the plate-shape roller bearing race 101 is illustrated in the fifth embodiment, the invention is not limited to the plate-shape roller bearing race 101. For example, one of or both the inner periphery and the outer periphery of each of the four arcuate race pieces 101a may be bent to form the flange prior to the laser welding.

### (Sixth Embodiment: Method of Producing Roller Bearing Outer Ring)

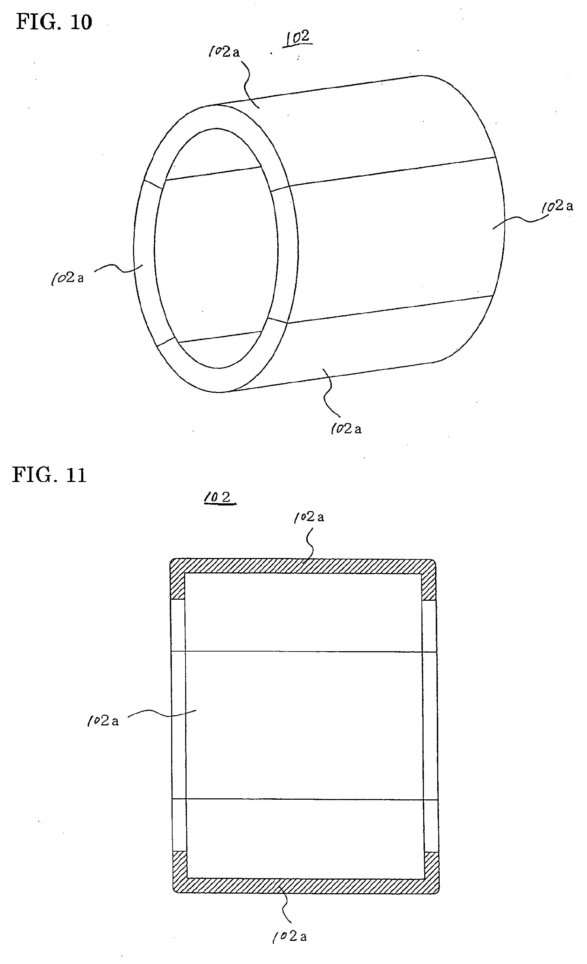

Fig. 10 is a perspective view showing a roller bearing outer ring produced by a roller bearing outer ring producing method according to a sixth embodiment of the invention. Fig. 11 is a sectional view showing the roller bearing outer ring.
In the roller bearing outer ring producing method of the sixth embodiment, one steel plate is processed by the press to form arcuate outer ring elements 102a each of which has a shape obtained by dividing a roller bearing outer ring into four segments.
Then, the flange is formed by bending both edges of each of the four arcuate outer ring elements 102a. Then, at each end face portion to be bonded of the arcuate outer ring elements 102a, the plate thickness is made smaller than those of other portions by the press working or the cutting.

Then, in the arcuate outer ring elements 102a, the end-face portions whose plate thicknesses are made smaller than those of other portions are confronted to each other, and the confronting portions are bonded to form the ring-shape roller bearing outer ring 102 by the laser welding as shown in Figs. 10 and 11.
Thus, the confronting end-face portions to be bonded are laser-welded while the plate thicknesses of both end-face portions of the arcuate outer ring elements 102a are made smaller than those of other portions. In the resistance welding, the plate thickness after welding increases due to the unavoidable generation of beads even if the plate thickness of the welded portion is thinned. On the other hand, in the laser welding, because the beads are hardly generated, the bonding can be performed keeping the plate thickness of the welded portion thin.

In the case where the radial roller bearing is formed to include plural rollers inserted between an inner ring member and the outer ring member produced by the roller bearing outer ring producing method of the invention, no load is applied to the roller, when the roller passes by the welded portion between the arcuate outer ring elements 102a of the roller bearing outer ring 102. Therefore, there is no risk of breakage in the welded portion between the arcuate outer ring elements 102a of the roller bearing outer ring 102, and the welded portion has the sufficient strength. The needle roller, the cylindrical roller, and the like are used as the roller retained by the cage.

In the roller bearing outer ring 102 produced by the roller bearing outer ring producing method of the sixth embodiment, the four arcuate outer ring elements 102a are laser-welded to form the roller bearing outer ring 102 having the ring shape. However, the invention is not limited thereto. For example, one plate may be shaped to form an arc outer ring element, and both end faces in a circumferential direction may be bonded. At least two arcuate outer ring elements 102a may be laser-welded to form the roller bearing outer ring 102 having the ring shape.
Various welding methods such as the TIG welding in which the smaller amount of bead is generated may be adopted in place of the laser welding.

In the sixth embodiment, the four arcuate outer ring elements 102a, each of which is one of four segments formed by dividing an outer ring, are formed by the press working of the one steel plate 110. The arcuate outer ring elements 102a may be formed by various processing methods such as the laser machining and the cutting with the cutting tool in place of the press working.

Thus, the invention having the above described configurations can widely be applied to various thrust roller bearing components and thrust needle bearing components, and various thrust roller bearings and thrust needle bearings.

## Claims

1. A roller bearing cage which is of a plate-shape circular ring formed by welding plate-shape pieces each constituting a part of the plate-shape circular ring, the roller bearing cage comprising:
a plurality of rectangular pockets which are radially formed; and
welding lines on which the plate-shape pieces are welded.

2. The roller bearing cage according to claim 1,
wherein the welding is laser welding.

3. The roller bearing cage according to claims 1 or 2,
wherein each of the welding lines is arranged from an inner periphery to an outer periphery of the plate-shape circular ring between pockets of the plurality of pockets.

4. A roller bearing cage which is of a cylinder body formed by laser welding a strip-shaped member so as to form a cylindrical shape, the roller bearing cage comprising:
a plurality of rectangular pockets which are formed in an axial direction of the cylindrical body; and
a laser welding line on which the strip-shaped member is laser-welded.

5. The roller bearing cage according to claim 4,
wherein the laser welding line is arranged from one end portion to the other end portion of the cylindrical body between pockets of the plurality of pockets.

6. A roller bearing comprising:
a plurality of rollers; and
a roller bearing cage in which the rollers are arranged in a radial direction,
wherein the roller bearing cage is the roller bearing cage as in any one of claims 1 to 3.

7. A roller bearing comprising:
a plurality of rollers; and
a roller bearing cage in which the rollers are arranged in parallel,
wherein the roller bearing cage is the roller bearing cage according to claims 4 or 5.

8. A method of producing a roller bearing race, comprising steps of:
machining a steel plate to form arcuate race pieces each of which has a shape obtained by dividing a roller bearing race into three or more segments;
making plate thicknesses of the end portions of each arcuate race piece smaller than those of other portions;
confronting the end portions of the arcuate race pieces; and
bonding the confronting end portions to form the ring-shape roller bearing race.

9. A roller bearing,
wherein a thrust roller bearing is formed using a roller bearing race produced by the roller bearing race producing method according to claim 8.

10. A method of producing a roller bearing outer ring formed by bonding end-face portions of one or a plurality of outer ring elements made of a steel plate, comprising steps of:
making plate thicknesses of the end-face portions of the outer ring element smaller than those of other portions;
confronting the end-face portions of the outer ring element; and
bonding the confronting end-face portions to form the ring-shape roller bearing outer ring.

11. A roller bearing,
wherein a radial roller bearing is formed using a roller bearing outer ring produced by the roller bearing outer ring producing method according to claim 10.
